# EUROPÄISCHE PATENTSCHRIFT

(11) **EP 3 359 832 B1**
(45) Veröffentlichungstag und Bekanntmachung des Hinweises auf die Patenterteilung: **23.10.2019**
(21) Anmeldenummer: 16775455.5
(22) Anmeldetag: 22.08.2016
(51) Int. Cl.: F16C 33/50

(54) **KÄFIGSEGMENT EINES WÄLZLAGERS**
CAGE SEGMENT OF A ROLLING BEARING
SEGMENT DE CAGE D'UN PALIER À ROULEMENT

(30) Priorität: 06.10.2015 DE 102015219277
(43) Veröffentlichungstag der Anmeldung: 15.08.2018
(73) Patentinhaber: Schaeffler Technologies AG & Co. KG, 91074 Herzogenaurach (DE)
(72) Erfinder: MEDER, Christoph, 97633 Sulzfeld (DE); BERNUTZ, Michael, 90478 Nürnberg (DE); GEYER, Hermann, 91487 Vestenbergsgreuth (DE); RUMPEL, Reinhard, 97228 Rottendorf (DE); LECHNER, Jürgen, 91462 Dachsbach (DE)
(86) Internationale Anmeldenummer: PCT/DE2016/200390
(87) Internationale Veröffentlichungsnummer: WO 2017/059850

(56) Entgegenhaltungen:
- DE-A1-102005 059 516
- DE-A1-102013 220 833
- JP-A- 2007 224 953
- JP-A- 2015 021 550
- JP-A- 2015 075 190

## Beschreibung

Die Erfindung betrifft ein Käfigsegment eines Wälzlagers, welches zwei Seitenplatten und zwei Stege aufweist, so dass das Käfigsegment einteilig ist, wobei die Stege sich parallel zur Drehachse der Wälzkörper des Wälzlagers erstrecken, und bei dem die Seitenplatten sowie die Stege eine Tasche zur Aufnahme eines Wälzkörpers bilden.

Wälzlager bestehen üblicherweise aus einem Innenring, einem Außenring und mehreren zwischen diesen Laufringen angeordneten Wälzkörpern. Um eine zur gleichmäßigen Lastverteilung erforderliche, auf den Umfang des Wälzlagers bezogen gleichverteilte Anordnung der Wälzkörper zu erreichen und einen Kontakt der Wälzkörper untereinander zu verhindern, sind die Wälzkörper meistens in einem Lagerkäfig geführt. Bei Großwälzlagern, die zum Beispiel in Walzwerken und in Windkraftanlagen zur Anwendung kommen, sind die Lagerkäfige häufig als Bolzenkäfige oder als Fensterkäfige ausgebildet. Ein Bolzenkäfig umfasst zwei geschlossene Seitenringe und mehrere umfangsseitig gleichverteilt zwischen den Seitenringen angeordnete Bolzen. Auf den Bolzen ist jeweils ein mit einer zentralen Lagerbohrung versehener Wälzkörper drehbar gelagert. Ein Fensterkäfig weist ebenfalls zwei geschlossene Seitenringe und mehrere umfangsseitig gleichverteilt zwischen den Seitenringen angeordnete Axialstege auf. Die Seitenringe und die Axialstege schließen mehrere üblicherweise als Fenster oder Taschen bezeichnete Zwischenräume ein, in denen jeweils ein Wälzkörper geführt ist. Bei den Wälzkörpern kann es sich abhängig von dem Aufbau und der Funktion des Wälzlagers um Zylinderrollen, Kegelrollen oder Tonnenrollen handeln.

Abweichend von der geschlossenen Bauart kann ein Fensterkäfig auch aus Käfigsegmenten gebildet sein, die entweder miteinander verbunden sind oder zumindest in Umfangsrichtung des Käfigs miteinander in Kontakt stehen. Darüber hinaus sind auch Käfigsegmente bekannt, die ohne miteinander in Kontakt zu stehen als Trenn- und Führungselemente zwischen den Wälzkörpern angeordnet sind.

Aus der DE 10 2009 016 017 B4 ist ein auf ein Trenn- und Führungselement reduziertes Käfigsegment eines Wälzlagers bekannt, das zwei axial äußere gabelförmige Führungskörper mit konkaven Anlaufflächen aufweist, die über einen radial ausgerichteten ebenen Axialsteg miteinander verbunden sind. Im montierten Zustand des betreffenden Wälzlagers sind die Käfigsegmente umfangsbezogen jeweils zwischen zwei Wälzkörpern angeordnet und mit der Basis der Führungskörper auf der Laufbahn des Innenrings geführt.

In der DE 10 2012 223 316 B3 ist ein ähnliches Käfigsegment eines Wälzlagers beschrieben, das zusätzlich zu den gabelförmigen Führungskörpern zwei die beiden Wälzkörper stirnseitig teilweise umgreifende Seitenscheiben aufweist. Die Seitenscheiben sind über den Axialsteg miteinander verbunden, stehen jedoch nicht mit den Seitenscheiben der umfangsseitig benachbarten Käfigsegmente in Kontakt. Die Seitenscheiben dienen zur seitlichen Führung des betreffenden Käfigsegmentes über die in einem der Laufringe in Seitenborden geführten Wälzkörper und weisen an ihren radialen Rändern jeweils eine Ausbuchtung zur Gleitführung auf den Laufbahnen der Laufringe auf.

Dagegen ist in der DE 10 2011 087 864 A1 ein kastenförmiges Käfigsegment eines Wälzlagers offenbart, bei dem zwei mit gabelförmigen Führungskörpern versehene Axialstege endseitig über jeweils einen Umfangssteg miteinander verbunden sind. Im montierten Zustand des betreffenden Wälzlagers ist jeweils ein Wälzkörper innerhalb des Käfigsegmentes angeordnet, und zwei weitere Wälzkörper liegen auf den Umfang des Wälzlagers bezogen außen jeweils an einem der Axialstege des Käfigsegmentes an. In dem betreffenden Wälzlager sind somit umfangsseitig wechselweise jeweils ein innerhalb eines Käfigsegmentes geführter Wälzkörper und ein stirnseitig frei zwischen zwei Käfigsegmenten geführter Wälzkörper angeordnet.

Bei Wälzlagern mit den genannten Käfigsegmenten ist die Packungsdichte der Wälzkörper im Wälzlager durch die Anordnung der Führungskörper an den Axialstegen begrenzt und zum Beispiel niedriger als bei entsprechenden Wälzlagern mit Bolzenkäfigen. Zudem kann es bei derartigen Wälzlagern aufgrund der fehlenden Abstützung der Käfigsegmente in Umfangsrichtung des Wälzlagers zu lokalen Verdichtungen von Wälzkörpern und Käfigsegmenten kommen, die schwingend auf- und abgebaut werden sowie zu einem verstärkten Verschleiß an den Kontaktflächen zwischen den Wälzkörpern und den Käfigsegmenten führen können.

Aus der DE 10 2013 207 301 A1 und der DE 10 2013 220 833 A1 sind dagegen Käfigsegmente von Wälzlagern bekannt, die jeweils zwei die beiden Wälzkörper stirnseitig in etwa hälftig umgreifende Seitenscheiben aufweisen, welche über einen radial ausgerichteten, ebenen Axialsteg miteinander verbunden sind. An dem Axialsteg des jeweiligen Käfigsegmentes sind Führungskörper mit Anlaufflächen zur Führung der zugeordneten Wälzkörpers angeordnet. Während das Käfigsegment gemäß der DE 10 2013 207 301 A1 zur radialen Führung mit äußeren Gleitkörpern versehene, an dem Axialsteg angeordnete Führungsfinger aufweist, sind bei dem Käfigsegment gemäß der DE 10 2013 220 833 A1 die Seitenscheiben hierzu mit radial äußeren Ausbuchtungen beziehungsweise Kontaktelemente versehen. Durch die Anordnung der Anlaufkörper an den Axialstegen ist die umfangsseitige Packungsdichte der Wälzkörper auch bei Wälzlagern, die mit diesen Ausführungen der Käfigsegmente versehen sind, begrenzt. Da die Käfigsegmente im montierten Zustand des betreffenden Wälzlagers aber über die in Umfangsrichtung des Wälzlagers weisenden Stirnflächen mit den benachbarten Käfigsegmenten in Kontakt stehen, ist bei den entsprechenden Wälzlagern eine gleichmäßige Verteilung der Wälzkörper über den Umfang sichergestellt.

In der nicht vorveröffentlichten DE 10 2015 200 381 A1 wird dagegen ein dem Käfigsegment gemäß der DE 10 2013 220 833 A1 ähnliches Käfigsegment eines Wälzlagers vorgeschlagen, bei dem die Seitenscheiben durch zwei radial gestaffelt angeordnete Rundbolzen miteinander verbunden sind. Die derart ausgebildeten Axialstege dienen einerseits zur Verbindung der beiden Seitenscheiben und andererseits zur Führung der beiden zugeordneten Wälzkörper. Aufgrund des freien Zwischenraumes zwischen den Rundbolzen weist ein mit derartigen Käfigsegmenten ausgerüstetes Wälzlager eine erhöhte Packungsdichte der Wälzkörper und somit eine höhere Tragzahl auf. Aufgrund der relativ großen Kontaktflächen zwischen den Rundbolzen und den Wälzkörpern können sich jedoch ein ungünstig hoher Wälzwiderstand und ein erhöhter Verschleiß ergeben.

Außerdem ist aus der nicht vorveröffentlichten DE 10 2015 206 533 A1 ein gattungsgemäßer Käfig für ein Wälzlager bekannt, der aus einer Mehrzahl von Eintaschensegmenten zusammengesetzt ist, wobei jedes dieser Eintaschensegmente einen Wälzkörper aufnimmt. Ein solches Eintaschensegment besteht aus zwei parallel zueinander angeordnete Seitenplatten und zwei parallel zur Längsachse des jeweiligen Wälzkörpers ausgerichtete plattenförmige Stege, wobei die Seitenplatten und die Stege fest miteinander verbunden sind. An den zueinander weisenden Flächen der Seitenplatten sind Kontaktelemente zum stirnseitigen Anlaufen des jeweiligen Wälzkörpers ausgebildet, und die plattenförmigen Stege weisen jeweils in Umfangsrichtung des Käfigs gerichtete Vorsprünge auf, an denen radiale Anlaufflächen für den jeweiligen Wälzkörper ausgebildet sind.

Schließlich sind aus den Druckschriften DE 10 2009 037 422 A1 und EP 2 264 325 A1 Segmente für einen segmentierten Wälzlagerkäfig mit jeweils 4 Taschen, aus der DE 10 26 577 A1 Käfigsegmente mit jeweils zwei Taschen, und aus der WO 2012 076 583 A1 und der JP 2015 021550 A Käfigsegmente mit jeweils einer Tasche bekannt.

Zu den bekannten segmentierten Wälzlagerkäfigen ist festzustellen, dass je weniger Wälzkörper in einem Käfigsegment angeordnet werden können, desto größer ist die Anzahl der Käfigbauteile, die zum Aufbau eines kompletten Wälzlagerkäfigs notwendig sind. Dies wirkt sich nachteilig bei den Herstellkosten, der Lagerhaltung, dem Transport und der Käfigmontage aus. Zwar ist bei Mehrtaschenkäfigsegmenten, also beispielsweise einem Käfigsegment mit vier Taschen, dieser Nachteil gegenüber einem Eintaschenkäfig deutlich reduziert, dafür steigt mit größer werdender Taschenanzahl die Klemmneigung der Wälzkörper und der Käfigsegmente im Wälzlager an. Außerdem muss beachtet werden, dass je mehr Taschen ein Käfigsegment aufweist, desto höher ist die Stossenergie, mit der ein solches, mit Wälzkörpern befülltes Käfigsegment im Betrieb an ein unmittelbar benachbartes Käfigsegment bei Überwindung eines Umfangsspiels anschlagen kann. Hierdurch ist der Käfigverschleiß bei Käfigsegmenten mit vielen Taschen vergleichsweise hoch. Schließlich ist insbesondere bei Großwälzlagern, etwa mit einem Durchmesser von mehr als 0,5 Meter, das jeweilige Käfigsegment um so schwerer und damit weniger einfach zu transportieren und zu montieren, je mehr Taschen ein solches Käfigsegment aufweist.

Vor diesem Hintergrund liegt der Erfindung die Aufgabe zugrunde, ein Käfigsegment eines Wälzlagers der eingangs genannten Bauart vorzustellen, mit dem ein Wälzlager mit niedrigem Wälzwiderstand und zugleich hoher Packungsdichte der Wälzkörper realisierbar ist. Außerdem soll ein solches Käfigsegment kostengünstig herstellbar sowie einfach lagerbar, transportierbar und montierbar sein. Schließlich soll ein aus solchen Käfigsegmenten aufgebauter Käfig für ein Wälzlager beschrieben werden.

Diese Aufgabe ist durch ein Käfigsegment mit den Merkmalen des Anspruchs 1 gelöst. Mit Anspruch 11 wurde ein weiterer unabhängiger Anspruch aufgestellt, welcher einen aus Käfigsegmenten aufgebauten Käfig für ein Wälzlager betrifft. Vorteilhafte Weiterbildungen sind in den jeweiligen Unteransprüchen genannt.

Die Erfindung betrifft demnach ein Käfigsegment eines Wälzlagers, welches zwei Seitenplatten und zwei Stege aufweist, so dass das Käfigsegment einteilig ist, wobei die Stege sich parallel zur Drehachse der Wälzkörper des Wälzlagers erstrecken, und bei dem die Seitenplatten sowie die Stege genau eine Tasche zur Aufnahme eines Wälzkörpers bilden. Zur Lösung der gestellten Aufgabe ist bei diesem Käfigsegment vorgesehen, dass sich die beiden Seitenplatten beiderseits der Tasche in Umfangsrichtung des Wälzlagers mit einer freien Raglänge R_{L} > ½ WK_{D} soweit erstrecken, dass diese zusammen mit jeweils einem der beiden Stege jeweils eine halbe Tasche zur Aufnahme eines unmittelbar benachbarten Wälzkörpers bilden, wobei WK_{D} dem Durchmesser eines in die halbe Tasche eingesetzten Wälzkörpers entspricht.

Dieses Käfigsegment kann zur Bildung von Käfigen genutzt werden, welche beispielsweise in Zylinderrollenlagern, in Kegelrollenlagern und in Pendelrollenlagern eingesetzt werden. Da ein gemäß der Erfindung ausgebildetes Käfigsegment mehr als nur einen Wälzkörper in sich aufnehmen und führen kann, und es zugleich hinsichtlich seiner Abmessungen in Umfangsrichtung des Wälzlagers kürzer ist als ein gattungsgemäßes Käfigsegment mit drei und mehr vollständigen Taschen, ist dieses insbesondere bei der Montage von Großwälzlagern vergleichsweise einfach zu handhaben.

Im Vergleich zu einem Segmentkäfig, welcher aus mehreren Käfigsegmenten mit jeweils nur einer Tasche zur Aufnahme jeweils nun eines Wälzkörpers aufgebaut ist, kann mit einem gemäß der Erfindung ausgebildeten Käfigsegment die Anzahl der in einem Wälzlager benötigten Käfigsegmente halbiert werden. Außerdem ermöglich ein mit den erfindungsgemäßen Käfigsegmenten aufgebauter Käfig eines Wälzlagers für diesen eine höhere Tragzahl, da im Vergleich zu Käfigsegmenten, die nur vollständige Taschen aufweisen, eine höhere Anzahl von Wälzkörpern in ein solches Wälzlager einbaubar sind.

Überdies kann durch die vorgeschlagene Konstruktion des Käfigsegments ein axiales sowie ein in Umfangsrichtung des Wälzlagers wirksames Taschenspiel in jeder Tasche und halben Tasche des erfindungsgemäßen Käfigsegments auf einfache Weise eingestellt sein. Dadurch ist ein klemmfreier Betrieb eines mit solchen Käfigsegmenten aufgebauten Käfigs in einem Wälzlager gewährleistet. Hierzu trägt nicht unwesentlich bei, dass die in die beiden halben Taschen des Käfigsegments eingesetzten Wälzkörper zwar an deren Stirnseiten axial geführt sind, in Umfangsrichtung des Wälzlagers gesehen jedoch nur an einer Seite. Zudem kann sich das erfindungsgemäße Käfigsegment bei allen Betriebssituationen des Wälzlagers im Bereich des Axialspiels und des Radialspiels frei bewegen, so dass an diesem und an den zugeordneten Wälzkörpern ein geringe Reibungsentwicklung und daher ein geringer Verschleiß zu erwarten ist.

Das Käfigsegment besteht erfindungsgemäß aus einem metallischen Werkstoff und ist einteilig hergestellt, indem beispielsweise die Käfigsegmente durch Gussverfahren, durch Sintern, durch eine Pulverbettherstellung oder mittels von Spritzverfahren gebildet werden Da im Vergleich zu den übrigen, aus Stahl hergestellten Wälzlagerkomponenten die bekannten metallischen Werkstoffe, aus welchen Käfige üblicherweise gefertigt werden, gleiche oder annähernd gleiche Wärmeausdehnungskoeffizienten haben, können besondere, dem Fachmann bekannte Maßnahmen zur Kompensation unterschiedlicher Wärmeausdehnungskoeffizienten zwischen dem Käfig und den übrigen Lagerbestandteilen selbst bei Großwälzlagern mit einen Durchmesser von > 0,5 Metern entfallen.

Der konstruktive Aufbau des Käfigsegments gemäß der Erfindung ermöglicht kein oder nur ein sehr geringes Endspiel in Umfangsrichtung eines aus diesen Käfigsegmenten aufgebauten Wälzlagers, da im Vergleich zu Käfigsegmenten mit nur einer Tasche die Anzahl der zum Aufbau eines Wälzlagerkäfigs benötigten Käfigsegmente deutlich reduziert ist, so dass auch die Summierung der Fertigungstolleranzen kleiner ist.

Ein weiterer Vorteil des gemäß der Erfindung ausgebildeten Käfigsegments ist es, dass dieses zwar mehr als nur einen Wälzkörper aufnimmt und führt, aber dennoch eine vergleichsweise geringe Gesamtmasse aufweist. Dies ist besondere deshalb vorteilhaft, weil zu einem Gesamtkäfig zusammengesetzte Käfigsegmente zueinander ein zwar geringes, aber nicht zu vernachlässigendes Spiel in Umfangsrichtung des Wälzlagers aufweisen. Dieses Spiel tritt zwischen den Stirnseiten der jeweils unmittelbar benachbarten Käfigsegmente auf. Im Betrieb eines solchen Wälzlagers kommt es zu Relativbewegungen und Stößen von jeweils zwei unmittelbar benachbarten Käfigsegmenten, die umso mehr kinetische Energie aufweisen, je mehr Taschen und je mehr Wälzkörper ein solches Käfigsegment aufweist. Insofern stellt das hier vorgeschlagene Käfigsegment mit seiner einzigen vollständigen Tasche und seinen beiden halben Taschen einen optimalen Kompromiss zwischen Käfigsegmenten mit nur einer Tasche sowie mit zwei oder mehr Taschen dar.

Dadurch, dass die in Umfangsrichtung des Wälzlagers weisenden Stirnseiten so ausgebildet sind, dass sie Berührflächen zum Anlegen an die Stirnflächen der jeweils unmittelbar benachbarten Käfigsegmente bilden, ist zusammen mit der freien Raglänge R_{L} > ½ WK_{D} der die halben Taschen axial begrenzenden Seitenplatten sichergestellt, dass sich die in dem Käfigsegment angeordneten Wälzkörper in allen Betriebssituationen im Rahmen des Taschenspiels frei bewegen können und ein Verklemmen derselben dadurch vermieden wird.

Der konstruktive Aufbau des erfindungsgemäßen Käfigsegments mit seinen endseitigen beiden halben Taschen führt zudem dazu, dass immer nur ein Wälzkörper in einer vollständigen Tasche aufgenommen ist, während jeweils zwei weitere Wälzkörper von jeweils einer halben Tasche dieses Käfigsegments und jeweils einer zweiten halben Tasche eines unmittelbar benachbarten Käfigsegments jeweils halb umgriffen sind. Hierdurch sind die Käfigsegmente eines Wälzlagers mittels der Wälzkörper auch untereinander verkettet, welches im Vergleich zu konventionellen Käfigsegmenten mit nur einer Tasche oder mit mehreren vollständigen Taschen als sehr vorteilhaft beurteilt wird.

Gemäß der Erfindung ist daher bevorzugt vorgesehen, dass mehrere dieser Käfigsegmente zur Bildung eines Wälzlagerkäfigs in Umfangsrichtung des Wälzlagers unmittelbar hintereinander angeordnet sind, wobei die beiden jeweils halben Taschen zusammen mit jeweils benachbarten halben Taschen der unmittelbar benachbarten Käfigsegmente jeweils eine vollständige Tasche bilden. Demnach ist jeder zweite Wälzkörper in einer einstückig ausgebildeten Tasche und sind die jeweils unmittelbar daneben angeordneten beiden Wälzkörper in jeweils einer zweiteiligen, aus zwei halben Taschen bestehenden Tasche aufgenommen.

Damit solche Käfigsegmente in einem Wälzlager reibungsarm geführt werden können, sieht eine Weiterbildung der Erfindung vor, dass die Seitenplatten des Käfigsegments nach radial außen und/oder nach radial innen hervorstehende Führungselemente aufweisen, welche als abgerundete Gleitflächen ausgebildet sind und zum Abstützen des jeweiligen Käfigsegments an einer Ringfläche eines Innenrings und/oder einer Ringfläche eines Außenrings des Wälzlagers dienen. Diese radialen Führungselemente sind bevorzugt an den in Umfangsrichtung des Wälzlagers weisenden Enden der Seitenplatten ausgebildet.

Um eine gute Schmierung der in den Taschen und halben Taschen des Käfigsegments angeordneten Wälzkörper zu begünstigen, kann vorgesehen sein, dass die Seitenplatten und/oder die Stege als Bohrungen oder radiale Ausnehmungen ausgebildete Schmiermittelzuführungen aufweisen, wobei die Seitenplatten im Bereich von jeweils zwei endseitigen freien Schenkeln der halben Taschen wenigstens jeweils eine dieser Bohrungen aufweisen.

Gemäß einer anderen Ausführungsform kann vorgesehen sein, dass die Wandstärke der Stege kleiner ist als die Wandstärke der Seitenplatten. Hierdurch sind die Seitenplatten optimal zur Aufnahme der beim Zusammenstoß mit benachbarten Käfigsegmenten auftretenden Stoßkräften vorbereitet, während mittels den vergleichsweise dünnen Stegen der Materialeinsatz und die Masse des jeweiligen Käfigsegments gering gehalten ist.

Das Käfigsegment gemäß der Erfindung ist für seinen Einsatz in einem Zylinderrollenlager, einem Kegelrollenlager oder einem Pendelrollenlager so ausgebildet, dass dessen beiden Seitenplatten in Umfangsrichtung des Wälzlagers gesehen eine größere Ausdehnung aufweisen als in der Radialrichtung des Wälzlagers.

Sofern das erfindungsgemäße Käfigsegment zum Aufbau eines Nadellagerkäfigs genutzt werden soll, ist vorgesehen, dass dessen beiden Seitenplatten in Radialrichtung des Wälzlagers gesehen eine größere Ausdehnung aufweisen als in der Umfangsrichtung des Wälzlagers.

Wenn das erfindungsgemäße Käfigsegment dazu vorgesehen ist, ein Bestandteil eines Käfigs für ein Kegelrollenlager zu sein, so ist gemäß einer Ausführungsform vorgesehen, dass die Tasche und die beiden halben Taschen des Käfigsegments jeweils zur Aufnahme einer Kegelrolle des Kegelrollenlagers ausgebildet sind und eine gleichschenklig trapezförmige Geometrie aufweisen.

Eine andere Weiterbildung des Käfigsegments gemäß der Erfindung besteht darin, dass die Abmessungen der Tasche sowie der beiden halben Taschen derart sind, dass die Wälzkörper dort jeweils mit einem Taschenspiel angeordnet sind. Dieses Taschenspiel weist eine in Axialrichtung und eine in Umfangsrichtung des zugeordneten Wälzlagers gerichtete Komponente auf.

Zur exakten und reibungsarmen Führung der Wälzkörper in der Tasche und den beiden halben Taschen des erfindungsgemäßen Käfigsegments weist dieses gemäß einer anderen Ausführungsform an den taschenseitigen und/oder halbtaschenseitigen Flächen der Seitenplatten und/oder der Stege axial hervorstehende Vorsprünge mit endseitigen Anlaufflächen für den in der jeweiligen Tasche oder halben Tasche aufzunehmenden Wälzkörper auf.

Die Vorsprünge an den taschenseitigen und/oder halbtaschenseitigen Flächen der Seitenplatten und/oder der Stege weisen in Abhängigkeit von der Geometrie und dem vorgesehenen Taschenspiel in der jeweiligen Tasche und den beiden halben Taschen jeweils gleiche oder unterschiedliche Erstreckungen auf. Zudem können diese Vorsprünge zur Optimierung der Ausrichtung der Wälzkörper in den zugeordneten Taschen oder halben Taschen in Bezug zu der gegenüberliegenden Fläche des Käfigsegments an unterschiedlichen Stellen angeordnet sein.

Ein Käfigsegment mit den Merkmalen der Erfindung kann für den Aufbau eines Käfigs eines Kegelrollenlagers dadurch gekennzeichnet sein, dass die beiden halben Taschen des Käfigsegments in radialer Ansicht jeweils eine weitgehend U-förmige Geometrie aufweisen, wobei zwei unmittelbar benachbarte halbe Taschen von zwei unmittelbar benachbarten Käfigsegmenten zur Aufnahme einer Kegelrolle eines Kegelrollenlagers ausgebildet sind, und bei dem die beiden U-Schenkel der ersten Seitenplatte länger sind als die beiden U-Schenkel der zweiten Seitenplatte. Hierdurch ist bei dem Käfigsegment konstruktiv berücksichtigt, dass die kegelförmigen Wälzkörper eines Kegelrollenlagers an ihren axialen Enden jeweils unterschiedliche Durchmesser aufweisen.

Bei einem gemäß den Merkmalen der Erfindung ausgebildeten Käfigsegment, welches auf den Laufbahnen der Lagerringe eines Wälzlagers geführt ist und daher keine radialen Führungselemente an den beiden Seitenplatten benötigt, ist gemäß einer Ausführungsform vorgesehen, dass die Stege an ihren radialen Enden jeweils wenigstens eine radial vorstehende Führungsfläche aufweisen, und dass der radiale Abstand von zwei radial gegenüber angeordneten Führungsflächen gleich groß oder etwas geringer als der Durchmesser der in dem Käfigsegment aufgenommen Wälzkörpern ist, so dass das jeweilige Käfigsegment mittels seiner Führungsflächen an der Laufbahn des Innenrings und/oder der Laufbahn des Außenrings des Wälzlagers radial geführt ist. Bei dieser Bauform kommen die Seitenplatten des Käfigsegments demnach nicht mit den beiden Lagerringen des Wälzlagers in Kontakt, wie noch anhand eines Ausführungsbeispiels genauer erläutert wird.

Schließlich betrifft die Erfindung auch einen aus den erfindungsgemäßen Käfigsegmenten aufgebauten Käfig eines Wälzlagers, der aus einer Mehrzahl von Käfigsegmenten mit wenigsten einigen der genannten Merkmale besteht, wobei das Wälzlager einen koaxial über einem Innenring angeordneten Außenring sowie radial dazwischen angeordnete Wälzkörper aufweist, wobei jeweils ein Wälzkörper in jeweils einer Tasche eines Käfigsegments aufgenommen ist, wobei jeder dazu unmittelbar benachbarte Wälzkörper in zwei halben Taschen von zwei unmittelbar benachbarten Käfigsegmenten aufgenommen ist, und bei dem die Käfigsegmente in Umfangsrichtung des Wälzlagers gesehen direkt aufeinanderfolgend hintereinander angeordnet sind sowie einander an deren in Umfangsrichtung des Wälzlagers weisenden Stirnseiten berühren.

Zur weiteren Verdeutlichung der Erfindung ist der Beschreibung eine Zeichnung von zwei Ausführungsbeispielen beigefügt. In dieser zeigt
- Fig. 1: eine perspektivische Ansicht eines erfindungsgemäßen Käfigsegments zur Bildung eines Käfigs für ein Wälzlagers gemäß einer erste Ausführungsform,
- Fig. 2: das Käfigsegment gemäß Fig. 1 in einer radialen Draufsicht,
- Fig. 3: das Käfigsegment gemäß den Figuren 1 und 2 gefüllt mit drei kegelabschnittförmigen Wälzkörpern in einer radialen Draufsicht,
- Fig. 4: das Käfigsegment gemäß Fig. 3 in einer perspektivischen Ansicht,
- Fig. 5: eine perspektivische Ansicht auf ein Kegelrollenlager mit abgenommenen Außenring mit Blick auf vier hintereinander angeordnete Käfigsegmente,
- Fig. 6: eine stirnseitige Ansicht des Wälzlagers gemäß Fig. 5 mit aufgesetztem Außenring,
- Fig. 7: zwei Käfigsegmente gemäß den Figuren 1 bis 4 eingesetzt in einen Umfangsabschnitt eines Kegelrollenlagers in perspektivischer Ansicht,
- Fig. 8: eine perspektivische Ansicht eines erfindungsgemäßen Käfigsegments zur Bildung eines Käfigs für ein Wälzlagers gemäß einer zweiten Ausführungsform,
- Fig. 9: die radiale Unterseite des Käfigsegments gemäß Fig. 8 gefüllt mit drei kegelabschnittförmigen Wälzkörpern,
- Fig. 10: das Käfigsegment gemäß den Figuren 8 und 9 gefüllt mit drei kegelabschnittförmigen Wälzkörpern in einer stirnseitigen Ansicht,
- Fig. 11: einen Axialschnitt durch ein Käfigsegment gemäß den Figuren 8 bis 10 mit Blick auf eine in Umfangsrichtung des Wälzlagers weisende Taschenfläche, und
- Fig. 12: einen Radialschnitt durch das mit Wälzkörpern befüllte Käfigsegment gemäß den Figuren 8 bis 11 mit Blick auf die Taschenfläche einer Seitenplatte.

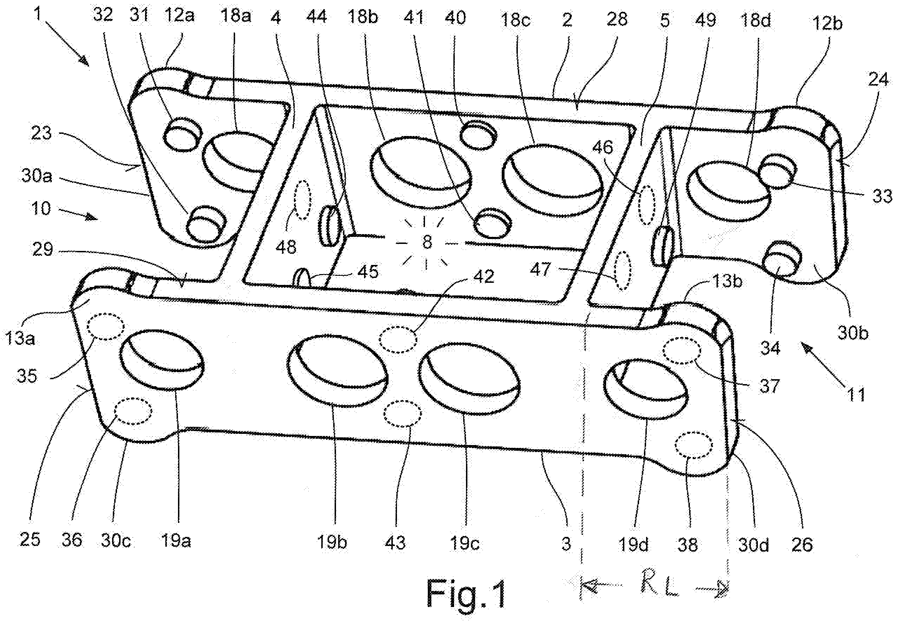

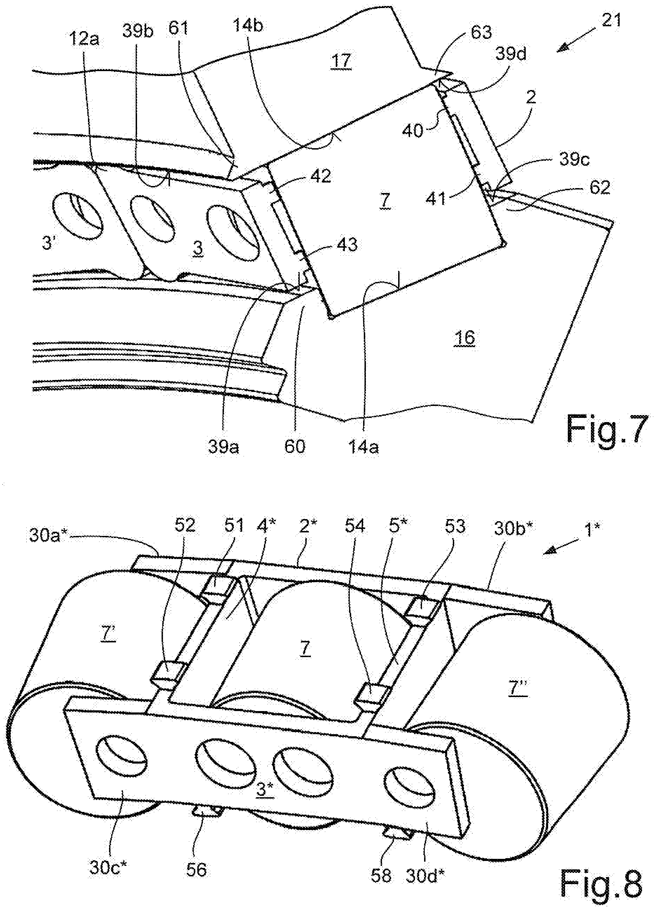

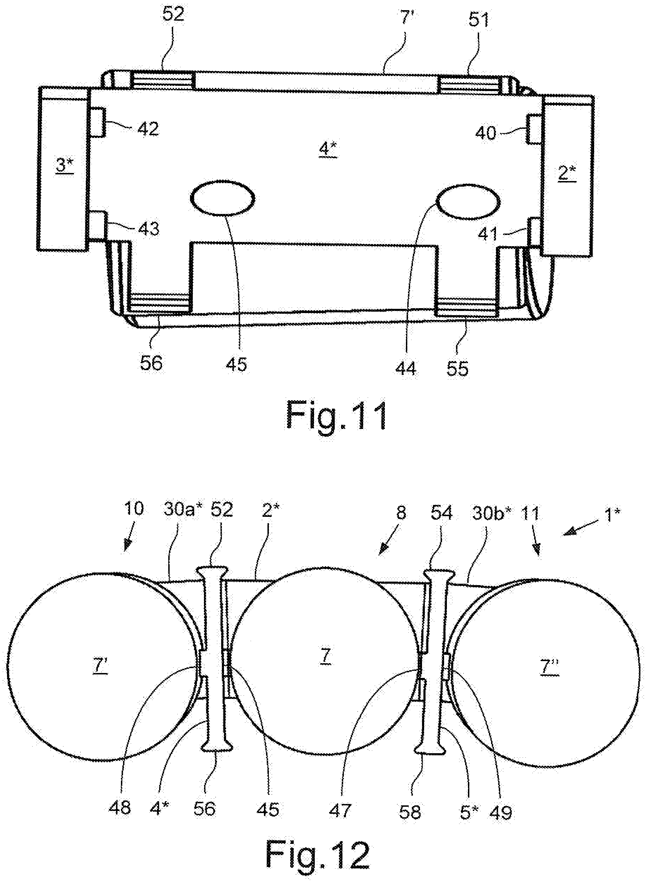

Demnach ist in den Figuren 1 bis 7 eine erste Ausführungsform des erfindungsgemäßen Käfigsegments 1 in verschiedenen Ansichten und Einbausituationen dargestellt. Die dort gezeigten Käfigsegmente 1 werden radial an laufbahnfernen Ringflächen der Lagerringe eines Wälzlagers geführt. Die Figuren 8 bis 12 zeigen eine zweite Ausführungsform eines Käfigsegments 1* mit den Merkmalen der Erfindung. Dieses Käfigsegment 1* wird an den Laufbahnen der genannten Lagerringe geführt.

Das Käfigsegment 1 gemäß den Figuren 1 bis 7 besteht zwei Seitenplatten 2, 3 und zwei Stegen 4, 5, wobei die Seitenplatten 2, 3 und die Stege 4, 5 fest miteinander verbunden sind. Bei der gezeigten Ausführungsform handelt es sich um ein Käfigsegment 1, welches in einem Gießverfahren aus Stahl hergestellt ist. Dieses Käfigsegment 1 dient zum Aufbau eines Käfigs 22 für ein Großwälzlager mit mehr als 0,5 Meter Durchmesser. Ein solcher Käfig 22 dient bekanntermaßen zur Aufnahme und Führung von kegelförmigen Wälzkörpern 7, 7', 7", 20 des als Kegelrollenlager ausgebildeten Wälzlagers 21.

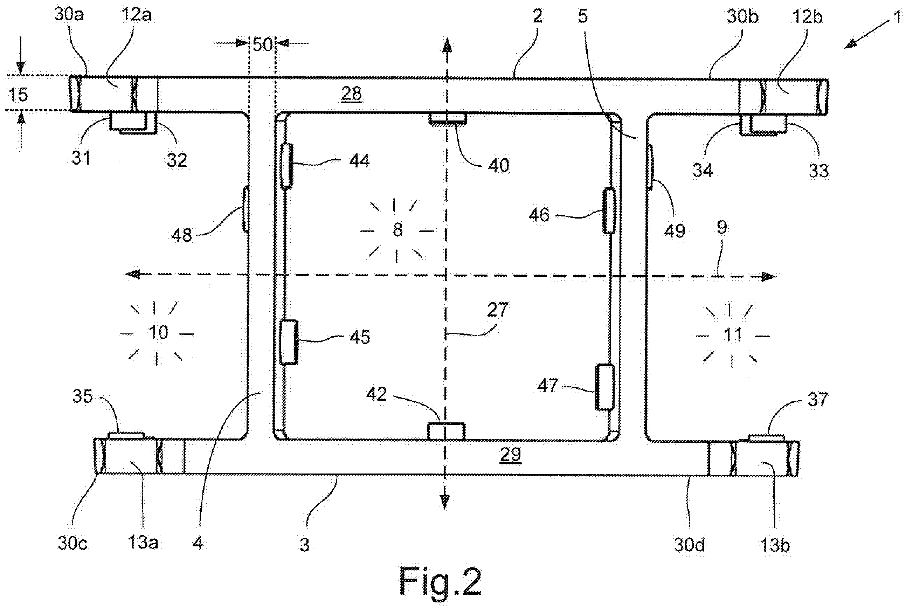

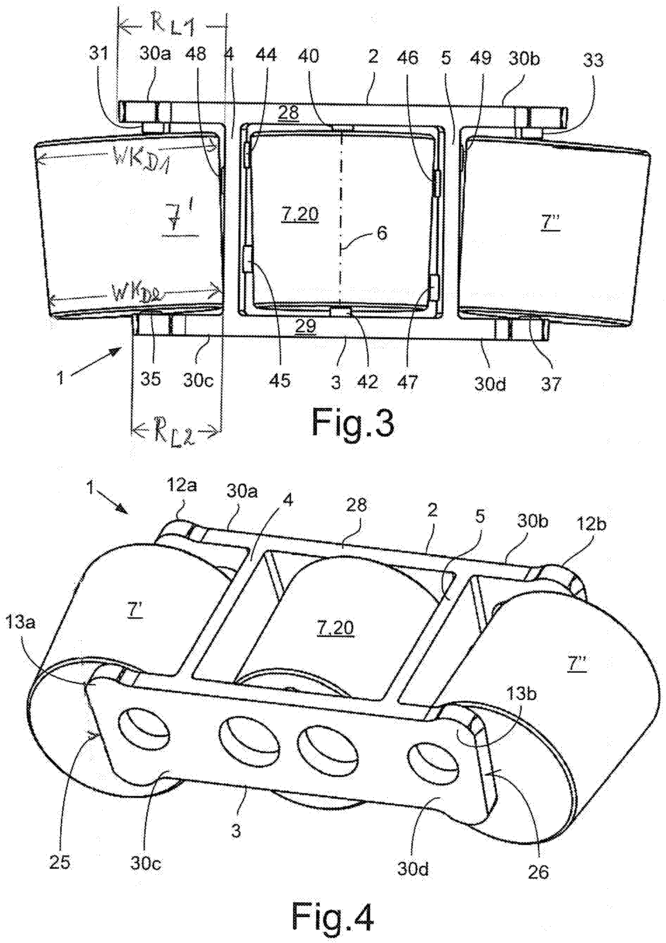

Wie insbesondere die Figuren 1 und 2 veranschaulichen, bilden oder umgrenzen die beiden Seitenplatten 2, 3 und die ebenfalls plattenförmig ausgebildeten Stege 4, 5 eine beidseitig radial offene Tasche 8, in die ein als Kegelrolle 20 ausgebildeter Wälzkörper 7 einsetzbar ist. In Umfangsrichtung 9 des Wälzlagers 21 gesehen sind unmittelbar neben der Tasche 8 an dem Käfigsegment 1 jeweils zwei halbe Taschen 10, 11 ausgebildet, die in einer radialen Draufsicht eine etwa U-förmige Geometrie aufweisen. Die nur zwei Stege 4, 5 des Käfigsegments 1 bilden dabei einerseits jeweils eine in Axialrichtung 9 des Wälzlagers 21 weisende Begrenzung der einzigen vollständigen Tasche 8 sowie eine ebensolche Begrenzung für die beiden halben Taschen 10, 11. Die halben Taschen 10, 11 sind dabei zusätzlich durch in Umfangsrichtung 9 des Wälzlagers 21 weisende Schenkel 30a, 30b; 30c, 30d der beiden Seitenplatten 2, 3 gebildet. Diese Schenkel 30a, 30b; 30c, 30d der beiden Seitenplatten 2, 3 haben zur Realisation eines Taschenspiels im Umfangsrichtung bezogen auf die jeweiligen Stege 4, 5 eine freie Raglänge R_{L}, welche größer ist als der Wälzkörperdurchmesser WK_{D} der jeweiligen Wälzkörper 7', 7", die von den halben Taschen 10, 11 aufgenommen werden. In diesem Zusammenhang wird darauf hingewiesen, dass unter einem Wälzkörperdurchmesser WK_{D} bei einem Zylinderrollenlager mit zylindrischen Wälzköpern der mittlere Wälzkörperdurchmesser und bei einem Kegelrollenlager mit kegelförmigen Wälzkörpern die jeweiligen Wälzkörperdurchmesser WK_{D1} und Wälzkörperdurchmesser WK_{D2} an den axialen Enden der kegelförmigen Wälzkörper verstanden werden, wobei im Zusammenhang mit dieser Anmeldung WK_{D1} stets für den größeren und WK_{D2} stets für den kleineren Durchmesser einer Kegelrolle stehen. Da die Käfigsegmente 1 gemäß der Figuren 1 und 2 Käfigsegmente 1 zur Aufnahme von Kegelrollen 20 zeigen und bei in die halben Taschen 10, 11 eingesetzten Kegelrollen 7', 7" (Fig.3) die axialen Enden dieser Kegelrollen 7', 7" dem Wälzkörperdurchmesser WK_{D1} den Schenkeln 30a, 30b und die axialen Enden dieser Kegelrollen 7', 7" mit dem Wälzkörperdurchmesser WK_{D2} den Schenkeln 30c, 30d unmittelbar gegenüber stehen, sind im Vergleich zu den freien Raglängen R_{L2} der Schenkel 30c, 30d die freien Raglängen R_{L1} der Schenkel 30a, 30b in Umfangsrichtung länger ausgebildet.

Die Seitenplatten 2, 3 weisen als Schmiermittelzuführungen wirksame Bohrungen auf, von denen jeweils eine Bohrung 18a, 18d; 19a, 19d im Bereich der die halben Taschen bildenden Schenkel 30a, 30b; 30c, 30d ausgebildet sind. Jeweils zwei weitere Bohrungen 18b, 18c; 19b, 19c sind in den beiden Seitenplatten 2, 3 im Bereich der vollständigen Tasche 8 ausgebildet. Zusätzlich weisen die beiden Seitenplatten 2, 3 an ihren radialen Stirnseiten jeweils eine radiale Ausnehmung auf, von denen lediglich die nach radial außen weisenden Ausnehmungen 28, 29 mit Bezugszeichen bezeichnet sind.

Wie Fig. 2 verdeutlicht, weisen die beiden Seitenplatten 2, 3 eine Wandstärke 15 auf, die größer ist als die Wandstärke 50 der beiden Stege 4, 5. Hierdurch ist das Käfigsegment 1 in Umfangsrichtung des Wälzlagers 1 beziehungsweise eines aus diesen Käfigsegmenten 1 zusammengestellten Käfigs 22 vergleichsweise stabil ausgelegt, so dass ein gegebenenfalls auftretendes Aufeinanderschlagen von zwei unmittelbar benachbarten Käfigsegmenten 1, 1', 1" für diese unbeschadet erfolgen kann.

Außerdem sind im Berech der jeweils beiden axialen Enden der Seitenplatten 2, 3 sowohl radial außen als auch radial innen Führungselemente ausgebildet, von denen nur die radial äußeren Führungselemente 12a, 12b; 13a, 13b mit Bezugszechen versehen sind. Diese Führungselemente 12a, 12b; 13a, 13b weisen an ihren freien radialen Enden Führungsflächen auf, mit denen die beiden Seitenplatten 2, 3 jeweils an einer zugeordneten Ringfläche 39a, 39c am Innenring 16 sowie an einer zugeordneten Ringfläche 39b, 39d am Außenring 17 des Wälzlagers 21 geführt werden. Dabei sind die beiden Ringflächen 39a, 39c des Innenrings 16 an den radialen Außenseiten von zwei axial gegenüberliegend neben der Laufbahn 14a des Innenrings 16 ausgebildeten Borden 60, 62 ausgebildet. Die beiden Ringflächen 39b, 39d am Außenring 17 sind durch zwei axiale Verlängerungen 61, 63 der dortigen Laufbahn 14b für die Wälzkörper 7 gebildet.

Durch die vorzugsweise konvexe Wölbung der Führungsflächen der Führungselemente 12a, 12b; 13a, 13b ergibt sich im Zusammenwirken mit den Ringfläche 39a, 39b am Innenring 16 beziehungsweise Außenring 17 eine etwa linsenförmige Kontaktgeometrie, mit der die jeweiligen Seitenplatten 2, 3 an den Lagerringen 16, 17 anliegen, was einen sehr geringen Verschleiß an den genannten Bauteilen bewirkt.

Die Seitenplatten 2, 3 und die Stege 4, 5 weisen im Bereich der vollständigen Tasche 8 an deren taschenseitigen Flächen taschenseitige Vorsprünge 40, 41, 42, 43, 44, 45, 46, 47 auf, die an ihren freien Enden jeweils eine Anlauffläche haben. Auch an den freien Schenkeln 30a, 30b; 30c, 30d der beiden Seitenplatten 2, 3 sind an deren taschenseitigen Flächen halbtaschenseitige Vorsprünge 31, 32, 33, 34, 35, 36, 37, 38 mit endseitigen Anlaufflächen ausgebildet. Weitere solche Vorsprünge 48, 49 sind an den halbtaschenseitigen Flächen der beiden Stege 4, 5 vorhanden. An die Anlaufflächen der genannten Vorsprünge können sich in der vollständigen Tasche 8 oder in den beiden halben Taschen 10, 11 angeordnete Wälzkörper 7, 7', 7" anlegen und dadurch abstützen. Die Anzahl, Anordnung und konkrete Ausbildung der dieser Vorsprünge sowie deren Anlaufflächen wird in Abhängigkeit von der Geometrie der Tasche 8 und der beiden halben Taschen 10, 11, vom Lagertyp, und von dem gewünschten Taschenspiel durch den Fachmann sinnvoll ausgewählt.

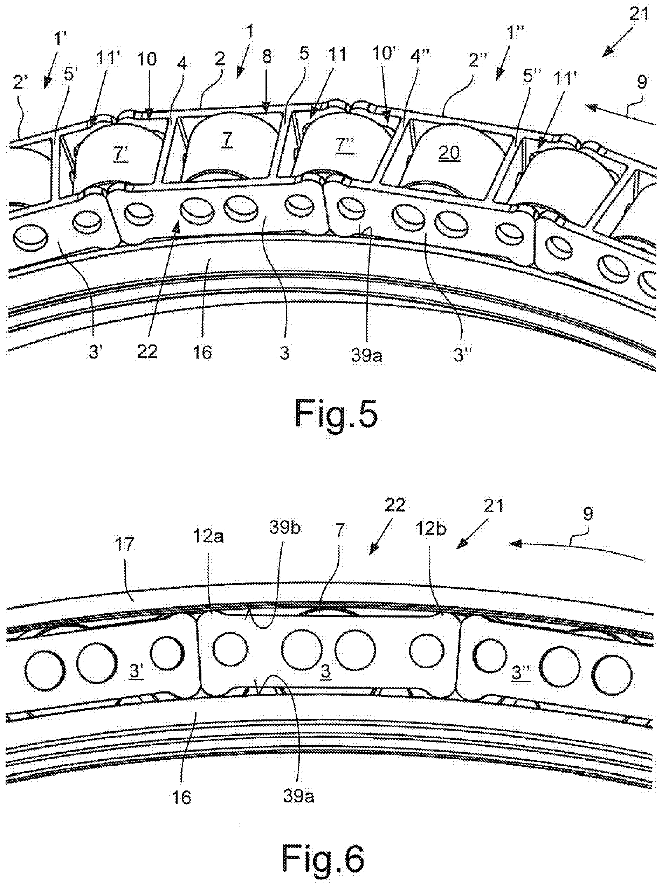

In den Figuren 5, 6 und 7 sind Umfangsabschnitte eines Wälzlagers 21 dargestellt, in denen erkennbar ist, dass ein Käfig 22 in einem Wälzlager 21 durch die Anordnung mehrerer Käfigsegmente 1, 1', 1" in Umfangsrichtung 9 des Wälzlagers 21 unmittelbar hintereinander gebildet ist. Die Seitenplatten 2, 3; 2', 3'; 2", 3" und die Stege 4, 5; 4', 5' dieser Käfigsegmente 1, 1', 1" weisen hierbei die gerade genanten etwas unterschiedlichen Bezugszeichen auf. Die unmittelbar benachbarten Käfigsegmente 1, 1', 1" stoßen mit ihren in Umfangsrichtung 9 des Wälzlagers 21 zeigenden planen Stirnseiten 23, 24; 25, 26 direkt aneinander. Dadurch ist aus jeweils zwei endseitigen halben Taschen jeweils von zwei unmittelbar benachbarten Käfigsegmenten 1, 1', 1" jeweils eine zusammengesetzte Tasche 10, 11'; 11, 10' gebildet. Wenn alle Käfigsegmente 1, 1', 1" eines Wälzlagerkäfigs 22 auf Block aneinander gereiht sind, bilden diese unter Nutzung der in den halben Taschen 10, 11'; 11, 10' aufgenommenen Wälzkörper 7, 7', 7" einen axial stützenden Seitenrand. Die Wälzkörper 7, 7', 7" wirken dabei wie Verbindungsmittel zwischen den jeweils unmittelbar benachbarten Käfigsegmenten 1. 1', 1". Die Stirnseiten 23, 24; 25, 26 der Seitenplatten 2, 3 können insbesondere für den Einsatz in Wälzlagern mit vergleichsweise kleinem Durchmesser auch konvex gewölbt ausgebildet sein.

In den Figuren 3 und 4 ist sehr schön erkennbar, wie ein erfindungsgemäß ausgebildetes Käfigsegment 1 mit drei kegelabschnittförmigen Wälzkörpern 7, 7', 7" befüllt ist. Dabei zeigt Fig. 3 sehr deutlich die unterschiedliche Anordnung sowie Länge der dortigen taschenseitigen und halbtaschenseitigen Vorsprünge 31, 33, 35, 37, 40, 42, 44, 45, 46, 47, 48, 49, an denen die jeweiligen Wälzkörper 7, 7', 7" in der vollständigen Tasche 8 und den beiden halben Taschen 10, 11 anliegen. Zusätzlich zeigt die Fig. 3 gut erkennbar, dass die Stege 4, 5 weitgehend parallel zu den Drehachsen 6 der Wälzkörper 7, 7', 7" ausgerichtet angeordnet sind.

In dem Axialschnitt der Fig. 7 ist deutlich erkennbar, dass an dem Innenring 16 des Wälzlagers 21 zwischen zwei radialen Borden 60, 62 eine radial innere Laufbahn 14a ausgebildet ist. Die beiden Borde 60, 62 weisen radial außen die schon erwähnten Ringflächen 39a, 39c zur radial inneren Führung der Seitenplatten 2, 3 auf. Der Außenring 17 verfügt dagegen über die schon erwähnte radial äußere Laufbahn 14b für die kegelabschnittförmigen Wälzkörper 7, 7', 7", welche axial beidseitig zwei Verlängerungen 61 ,63 aufweist, an denen die Ringflächen 39b, 39d zur radial äußeren Abstützung der Seitenplatten 2, 3 ausgebildet sind.

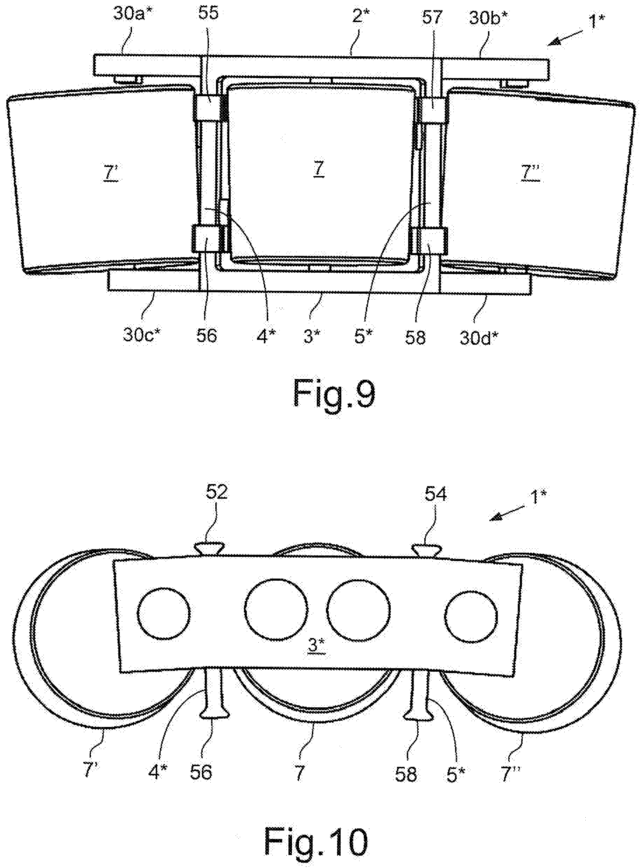

Bei der in den Figuren 8 bis 12 gezeigten zweiten Ausführungsform eines gemäß den Merkmalen der Erfindung ausgebildeten Käfigsegments 1* sind an den beiden Seitenplatten 2*, 3* keine radialen Ausnehmungen an deren radial inneren und äußeren Seiten ausgebildet, wohl aber die bereits im Zusammenhang mit dem ersten Ausführungsbeispiel genannten Bohrungen für einen Schmiermitteldurchtritt. Das Käfigsegment 1* ist aus einer viereckigen, mittleren Plattenstruktur und daran angeordneten freien Schenkeln 30a*, 30b*; 30c*, 30d*gebildet. Die viereckige Plattenstruktur besteht aus den beiden Seitenplatten 2*, 3* und zwei plattenförmigen Stegen 4*, 5*. Die freien Schenkel 30a*, 30b*; 30c*, 30d* sind ebenfalls plattenartig ausgebildet und an der viereckige Plattenstruktur angeschweißten, wobei die freien Schenkel 30a*, 30b*; 30c*, 30d* in die Umfangsrichtung 9 eines Wälzlagers 21 weisen. Das Käfigsegment 1* gemäß den Figuren 8 bis 12 wird an den Laufflächen 14a, 14b der beiden Lagerringe 16, 17 des Wälzlagers 21 geführt. Hierfür weist des Käfigsegment 1* an der radialen Außenseite (Fig. 8) und an der radialen Innenseite der beiden Stege 4*, 5* jeweils zwei radiale Führungsflächen 51, 52, 53, 53, 54, 55, 56, 57, 58 auf, die im eingebauten Zustand des Käfigsegments 1* auf den zugeordneten Laufflächen 14a, 14b von Innenring 16 beziehungsweise Außenring 17 radial abstützend zur Anlage gelangen. Fig. 8 zeigt hierzu erläuternd die radiale Oberseite und Fig. 9 die radiale Unterseite eines solchen Käfigsegments 1*.

Auch bei dieser zweiten Ausführungsform eines Käfigsegments 1* mit den Merkmalen der Erfindung weist dieses eine vollständige Tasche 8 und zwei halbe Taschen 10, 11 zur Aufnahme von in diesem Fall ebenfalls kegelabschnittförmigen Wälzkörpern 7, 7', 7" auf. In die vollständige Tasche 8 und in die beiden halben Taschen 10, 11 ragen ebenfalls Vorsprünge 31, 33, 35, 37, 40, 42, 44, 45, 46, 47, 48, 49 in gleicher oder ähnlicher Geometrie und Anzahl wie bei dem Käfigsegments 1 gemäß den Figuren 1 bis 7. Die beiden Käfigsegmente 1, 1* der beiden Ausführungsbeispiele unterscheiden sich voneinander im Wesentlichen durch die Art der Führung derselben an den beiden Lagerringen 16, 17.

### Bezugszeichenliste

- 1, 1*: Käfigsegment
- 1', 1": Benachbartes Käfigsegment
- 2, 2*: Erste Seitenplatte
- 2', 2": Benachbarte erste Seitenplatte
- 3, 3*: Zweite Seitenplatte
- 3', 3": Benachbarte zweite Seitenplatte
- 4, 4*: Erster Steg
- 4', 4": Benachbarter erster Steg
- 5, 5*: Zweiter Steg
- 5', 5": Benachbarter zweiter Steg
- 6: Drehachse der Wälzkörper
- 7, 7', 7": Wälzkörper
- 8: Tasche
- 9: Umfangsrichtung des Wälzlagers
- 10, 10': Erste halbe Tasche eines Käfigsegments
- 11, 11': Zweite halbe Tasche eines Käfigsegments
- 12a, 12b: Führungselemente an der ersten Seitenplatte
- 13a, 13b: Führungselemente an der zweiten Seitenplatte
- 14a: Laufbahn am Innenring
- 14b: Laufbahn am Außenring
- 15: Wandstärke einer Seitenplatte
- 16: Innenring
- 17: Außenring
- 18a, 18b: Bohrungen in der ersten Seitenplatte
- 18c, 18d: Bohrungen in der ersten Seitenplatte
- 19a, 19b: Bohrungen in der zweiten Seitenplatte
- 19c, 19d: Bohrungen in der zweiten Seitenplatte
- 20: Kegelrolle
- 21: Kegelrollenlager, Wälzlager
- 22: Käfig
- 23: Erste Stirnseite der ersten Seitenplatte
- 24: Zweite Stirnseite der ersten Seitenplatte
- 25: Erste Stirnseite der zweiten Seitenplatte
- 26: Zweite Stirnseite der zweiten Seitenplatte
- 27: Axialrichtung des Wälzlagers und des Käfigs
- 28: Radiale Ausnehmung an der ersten Seitenplatte
- 29: Radiale Ausnehmung an der zweiten Seitenplatte
- 30: Bord am Innenring
- 30a, 30a*: Erster freier Schenkel an der ersten Seitenplatte
- 30b, 30b*: Zweiter freier Schenkel an der ersten Seitenplatte
- 30c, 30c*: Erster freier Schenkel an der zweiten Seitenplatte
- 30d, 30d*: Zweiter freier Schenkel an der zweiten Seitenplatte
- 31: Halbtaschenseitiger Vorsprung an der ersten Seitenplatte
- 32: Halbtaschenseitiger Vorsprung an der ersten Seitenplatte
- 33: Halbtaschenseitiger Vorsprung an der ersten Seitenplatte
- 34: Halbtaschenseitiger Vorsprung an der ersten Seitenplatte
- 35: Halbtaschenseitiger Vorsprung an der zweiten Seitenplatte
- 36: Halbtaschenseitiger Vorsprung an der zweiten Seitenplatte
- 37: Halbtaschenseitiger Vorsprung an der zweiten Seitenplatte
- 38: Halbtaschenseitiger Vorsprung an der zweiten Seitenplatte
- 39a, 39c: Ringflächen am Innenring für Seitenplatten
- 39b, 39d: Ringflächen am Außenring für Seitenplatten
- 40, 41: Taschenseitige Vorsprünge an der ersten Seitenplatte
- 42, 43: Taschenseitige Vorsprünge an der zweiten Seitenplatte
- 44, 45: Taschenseitige Vorsprünge am ersten Steg
- 46, 47: Taschenseitige Vorsprünge am zweiten Steg
- 48: Halbtaschenseitiger Vorsprung am ersten Steg
- 49: Halbtaschenseitiger Vorsprung am zweiten Steg
- 50: Wandstärke der Stege
- 51: Erste Führungsfläche am ersten Steg 4*
- 52: Zweite Führungsfläche am ersten Steg 4*
- 53: Erste Führungsfläche am zweiten Steg 5*
- 54: Zweite Führungsfläche am zweiten Steg 5*
- 55: Dritte Führungsfläche am ersten Steg 4*
- 56: Vierte Führungsfläche am ersten Steg 4*
- 57: Dritte Führungsfläche am zweiten Steg 5*
- 58: Vierte Führungsfläche am zweiten Steg 5*
- 60: Erster Bord am Innenring
- 61: Erste Verlängerung am Außenring
- 62: Zweiter Bord am Innenring
- 63: Zweite Verlängerung am Außenring
- WK_{D}: Wälzkörperdurchmesser
- R_{L}: Raglänge

## Patentansprüche

1. Käfigsegment (1, 1', 1"; 1*) eines Wälzlagers (21),
welches zwei Seitenplatten (2, 2', 2"; 2*; 3, 3', 3"; 3*) und zwei Stege (4, 4', 4"; 4*; 5, 5', 5"; 5*) aufweist, so dass das Käfigsegment einteilig ist, wobei die Stege (4, 4', 4"; 4*; 5, 5', 5"; 5*) sich parallel zur Drehachse (6) der Wälzkörper (7, 7', 7") des Wälzlagers (21) erstrecken,
und bei dem die Seitenplatten (2, 2', 2"; 2*; 3, 3', 3"; 3*) sowie die Stege (4, 4', 4"; 4*; 5, 5', 5"; 5*) genau eine Tasche (8) zur Aufnahme eines Wälzkörpers (7) bilden,
**dadurch gekennzeichnet,**
**dass** sich die beiden Seitenplatten (2, 2', 2"; 2*) beiderseits der Tasche (8) in Umfangsrichtung (9) des Wälzlagers (21) mit einer freien Raglänge R_{L} > ½ WK_{D} soweit erstrecken,
**dass** diese zusammen mit jeweils einem der beiden Stege (4, 4', 4"; 4*; 5, 5', 5"; 5*) jeweils eine halbe Tasche (10, 10'; 11, 11') zur Aufnahme eines unmittelbar benachbarten Wälzkörpers (7', 7") bilden, wobei WK_{D} dem Durchmesser eines in die halbe Tasche (10, 10'; 11, 11') eingesetzten Wälzkörpers (7', 7") entspricht.

2. Käfigsegment (1, 1', 1"; 1*) nach Anspruch 1, **dadurch gekennzeichnet, dass** mehrere dieser Käfigsegmente (1, 1', 1", 1*) zur Bildung eines Käfigs (22) für das Wälzlager (21) in Umfangsrichtung (9) des Wälzlagers (21) unmittelbar hintereinander angeordnet sind,
wobei die beiden jeweils halben Taschen (10, 11) zusammen mit jeweils benachbarten halben Taschen (11'; 10') der unmittelbar benachbarten Käfigsegmente (1, 1', 1") jeweils eine vollständige Tasche bilden.

3. Käfigsegment (1, 1', 1") nach einem der Ansprüche 1 bis 2, **dadurch gekennzeichnet, dass** die Seitenplatten (2, 2', 2"; 3, 3', 3") nach radial außen und/oder nach radial innen hervorstehende Führungselemente (12a, 12b; 13a, 13b) aufweisen, welche als abgerundete Gleitflächen zum Abstützen an einer Ringfläche (39a, 39b) eines Innenrings (16) oder Außenrings (17) des Wälzlagers (21) ausgebildet sind.

4. Käfigsegment (1, 1', 1"; 1*) nach einem der Ansprüche 1 bis 3, **dadurch gekennzeichnet, dass** die Seitenplatten (2, 2', 2"; 2*; 3, 3', 3"; 3*) und/oder die Stege (4, 4', 4"; 4*; 5, 5', 5"; 5*) Schmiermittelzuführungen aufweisen, welche als Bohrungen (18a, 18b, 18c, 18d) oder radiale Ausnehmungen (28, 29) ausgebildet sind,
wobei die Seitenplatten (2, 2', 2"; 2*; 3, 3', 3"; 3*) im Bereich von jeweils zwei endseitigen freien Schenkeln (30a, 30a*, 30b, 30b*; 30c, 30c*, 30d, 30d*) der halben Tasche (10, 11) wenigstens jeweils eine dieser Bohrungen (18a, 18d; 19a, 19d) aufweisen.

5. Käfigsegment (1, 1', 1"; 1*) nach einem der Ansprüche 1 bis 4, **dadurch gekennzeichnet, dass** die Abmessungen der Tasche (8) und der beiden halben Taschen (10, 11; 10', 11'; 10", 11") derart sind, dass die Wälzkörper (7, 7', 7") dort jeweils mit einem Taschenspiel angeordnet sind.

6. Käfigsegment (1, 1', 1"; 1*) nach einem der Ansprüche 1 bis 5, **dadurch gekennzeichnet, dass** an den taschenseitigen und/oder halbtaschenseitigen Flächen der Seitenplatten (2, 2', 2"; 2*; 3, 3', 3"; 3*) und/oder der Stege (4, 4', 4"; 4*; 5, 5', 5"; 5*) hervorstehende Vorsprünge (31, 32, 33, 34, 35, 36, 37, 38, 40, 41, 42, 43, 44, 45, 46, 47, 48, 49) mit endseitigen Anlaufflächen für den in der jeweiligen Tasche (8) oder halben Tasche (10, 10'; 11, 11') aufzunehmenden Wälzkörper (7, 7', 7") ausgebildet sind.

7. Käfigsegment (1, 1', 1"; 1*) nach Anspruch 6, **dadurch gekennzeichnet, dass** die Vorsprünge (31 - 38, 40 - 49) an den taschenseitigen und/oder halbtaschenseitigen Flächen der Seitenplatten (2, 2', 2"; 2*; 3, 3', 3"; 3*) und/oder der Stege (4, 4', 4"; 4*; 5, 5', 5"; 5*) in Abhängigkeit von der Geometrie und dem vorgesehnen Taschenspiel in der jeweiligen Tasche (8) und halben Taschen (10, 11; 10', 11'; 10", 11") jeweils gleiche oder unterschiedliche Erstreckungen aufweisen und/oder in Bezug zu der gegenüberliegenden Fläche des Käfigsegments (1, 1', 1"; 1*) an unterschiedlichen Stellen angeordnet sind.

8. Käfigsegment (1, 1', 1"; 1*) nach einem der Ansprüche 1 bis 7, **dadurch gekennzeichnet, dass** die beiden halben Taschen (10, 11; 10', 11'; 10", 11") eines jeden Käfigsegments (1, 1', 1"; 1*) in radialen Ansicht jeweils eine weitgehend U-förmige Geometrie aufweisen,
wobei zwei unmittelbar benachbarte halbe Taschen (10, 11'; 11', 10') von zwei unmittelbar benachbarten Käfigsegmenten (1', 1, 1") zur Aufnahme einer Kegelrolle (20) eines Kegelrollenlagers (21) ausgebildet sind,
und bei dem die beiden U-Schenkel (30a, 30b) der ersten Seitenplatte (2, 2', 2"; 2*) länger sind als die beiden U-Schenkel (30c, 30d) der zweiten Seitenplatte (2, 2', 2"; 2*).

9. Käfigsegment (1*) nach einem der Ansprüche 1 bis 8, **dadurch gekennzeichnet, dass** die Stege (4*, 5*) an ihren radialen Enden jeweils wenigstens eine radial vorstehende Führungsfläche (51, 52, 53, 54, 55, 56, 57, 58) aufweisen,
und dass der radiale Abstand von zwei radial gegenüber angeordneten Führungsflächen (51 - 58) gleich groß oder etwas geringer als der Durchmesser der in dem Käfigsegment (1') aufgenommen Wälzkörpern (7, 7', 7") ist,
so dass das Käfigsegment (1*) mittels der Führungsflächen (51 - 58) an der Laufbahn (14a) des Innenrings (16) und der Laufbahn (14b) des Außenrings (17) des Wälzlagers (21) radial geführt ist.

10. Käfig (22) eines Wälzlagers (21), **dadurch gekennzeichnet, dass** der Käfig (22) aus einer Mehrzahl von Käfigsegmenten (1, 1', 1"; 1*) mit den Merkmalen von wenigstens einem der vorherigen Ansprüche besteht,
wobei das Wälzlager (21) einen koaxial über einem Innenring (16) angeordneten Außenring (17) sowie radial dazwischen angeordnete Wälzkörper (7, 7', 7") aufweist,
wobei jeweils ein Wälzkörper (7) in jeweils einer Tasche (8) eines Käfigsegments (1, 1', 1"; 1*) aufgenommen ist,
wobei jeder unmittelbar dazu benachbarte Wälzkörper (7', 7") in zwei halben Taschen (10', 11'; 10", 11") von zwei unmittelbar benachbarten Käfigsegmenten (1, 1', 1"; 1*) aufgenommen ist,
und bei dem die Käfigsegmente (1, 1', 1"; 1*) in Umfangsrichtung (9) des Wälzlagers (21) gesehen direkt aufeinanderfolgend hintereinander angeordnet sind.

11. Käfig (22) eines Wälzlagers (21) nach Anspruch 10, **dadurch gekennzeichnet, dass** sich alle den Käfig (22) bildenden Käfigsegmente (1, 1', 1"; 1*) einander an deren in Umfangsrichtung des Wälzlagers (21) weisenden Stirnseiten (23, 24, 25, 26) berühren.

## Claims

1. A cage segment (1, 1', 1"; 1*) of a rolling bearing (21),
having two side plates (2, 2', 2"; 2*; 3, 3', 3"; 3*) and two crosspieces (4, 4', 4"; 4*; 5, 5', 5"; 5*) so that the cage segment is in one piece,
wherein the crosspieces (4, 4', 4"; 4*; 5, 5', 5"; 5*) extend parallel to the axis of rotation (6) of the rolling bodies (7, 7', 7") of the rolling bearing (21),
and wherein the side plates (2, 2', 2"; 2*; 3, 3', 3"; 3*) and the crosspieces (4, 4', 4"; 4*; 5, 5', 5"; 5*) form exactly one pocket (8) for receiving a rolling body (7),
**characterised in**
**that** the two side plates (2, 2', 2"; 2*) extend thus far on both sides of the pocket (8) in the circumferential direction (9) of the rolling bearing (21) with a free protruding length R_{L} > ½ WKD,
**that** said side plates each together with one of the two crosspieces (4, 4', 4"; 4*; 5, 5', 5"; 5*) each form a half pocket (10, 10'; 11, 11') for receiving an immediately adjacent rolling element (7', 7"), wherein WK_{D} corresponds to the diameter of a rolling body (7', 7") inserted into the half pocket (10, 10'; 11, 11').

2. The cage segment (1, 1', 1", 1*) according to claim 1, **characterised in that**
a plurality of said cage segments (1, 1', 1", 1*) are arranged directly behind one another for forming a cage (22) for the rolling bearing (21) in the circumferential direction (9) of the rolling bearing (21),
wherein the two half pockets (10, 11), together with the respective adjacent half pockets (11', 10') of the immediately adjacent cage segments (1, 1', 1") form a full pocket in each case.

3. The cage segment (1, 1', 1") according to any one of claims 1 to 2, **characterised in that** the side plates (2, 2', 2"; 3, 3', 3") have radially outwardly and/or radially inwardly protruding guide elements (12a, 12b; 13a, 13b), which are designed as rounded sliding surfaces for supporting on an annular surface (39a, 39b) of an inner ring (16) or outer ring (17) of the rolling bearing (21).

4. The cage segment (1, 1', 1"; 1*) according to any one of claims 1 to 3, **characterised in that** the side plates (2, 2', 2"; 2*; 3, 3', 3"; 3*) and/or the crosspieces (4, 4', 4"; 4*; 5, 5', 5"; 5*) have lubricant feeds, which are designed in the form of bores (18a, 18b, 18c, 18d) or radial recesses (28, 29),
wherein the side plates (2, 2', 2"; 2*; 3', 3', 3"; 3*) each have at least one of said bores (18a, 18d; 19a, 19d) in the region of two free legs (30a, 30a*, 30b, 30b*; 30c, 30c*, 30d, 30d*) of the half pocket (10, 11) in each case.

5. The cage segment (1, 1', 1"; 1*) according to any one of claims 1 to 4, **characterised in that** the dimensions of the pocket (8) and of the two half pockets (10, 11; 10', 11'; 10", 11") are such that the rolling bodies (7, 7', 7") are each arranged there with a pocket clearance.

6. The cage segment (1, 1', 1"; 1*) according to any one of claims 1 to 5, **characterised in that**, on the pocket-side and/or half-pocket-side surfaces of the side plates (2, 2', 2"; 2*; 3, 3', 3"; 3*) and/or of the crosspieces (4, 4', 4"; 4*; 5, 5', 5"; 5*), protruding projections (31, 32, 33, 34, 35, 36, 37, 38, 40, 41, 42, 43, 44, 45, 46, 47, 48, 49) having end-side abutment surfaces are designed for the rolling body (7, 7', 7") to be received in the pocket (8) or half pocket (10, 10'; 11, 11').

7. The cage segment (1, 1', 1"; 1*) according to claim 6, **characterised in that** the projections (31-38, 40-49) on the pocket-side and/or half-pocket-side surfaces of the side plates (2, 2', 2"; 2*; 3, 3', 3"; 3*) and/or of the crosspieces (4, 4', 4"; 4*; 5, 5', 5"; 5*) each have the same or different extensions, according to the geometry and the pocket clearance provided in the pocket (8) and half pockets (10, 11; 10', 11'; 10", 11 "), and/or are arranged at different locations relative to the opposite surface of the cage segment (1, 1', 1"; 1*).

8. The cage segment (1, 1', 1"; 1*) according to any one of claims 1 to 7, **characterised in that** the two half pockets (10, 11; 10', 11'; 10", 11") of each cage segment (1, 1', 1"; 1*) each have a substantially U-shaped geometry in radial view,
wherein two immediately adjacent half pockets (10, 11'; 11', 10') of two immediately adjacent cage segments (1', 1, 1") are designed to receive a tapered roller (20) of a tapered rolling bearing (21),
and in which the two U-legs (30a, 30b) of the first side plate (2, 2', 2"; 2*) are longer than the two U-legs (30c, 30d) of the second side plate (2, 2', 2"; 2*).

9. The cage segment (1*) according to any one of claims 1 to 8, **characterised in that** the crosspieces (4*, 5*) each have at least one radially projecting guide surface (51, 52, 53, 54, 55, 56, 57, 58) at their radial ends,
and that the radial distance of two radially opposed guide surfaces (51-58) is equal to or slightly smaller than the diameter of the rolling bodies (7, 7', 7") received in the cage segment (1')
so that the cage segment (1*) is radially guided on the raceway (14a) of the inner ring (16) and the raceway (14b) of the outer ring (17) of the rolling bearing (21) by means of the guide surfaces (51-58).

10. A cage (22) of a rolling bearing (21), **characterised in that** the cage (22) consists of a plurality of cage segments (1, 1', 1"; 1*) having the features of at least one of the preceding claims,
wherein the rolling bearing (21) has an outer ring (17) arranged coaxially over an inner ring (16) and rolling bodies (7, 7', 7") arranged radially therebetween,
wherein a rolling body (7) in each case is received in each case in a pocket (8) of a cage segment (1, 1', 1"; 1*),
wherein each rolling body (7', 7") immediately adjacent thereto is received in two half pockets (10', 11'; 10", 11") of two immediately adjacent cage segments (1, 1', 1"; 1*),
and wherein the cage segments (1, 1', 1"; 1*) are arranged immediately successively one after the other as viewed in the circumferential direction (9) of the rolling bearing (21).

11. The cage (22) of a rolling bearing (21) according to claim 10, **characterised in that** all the cage segments (1, 1', 1"; 1*) forming the cage (22) contact one another at the end sides (23, 24, 25, 26) thereof facing in the circumferential direction of the rolling bearing (21).

## Revendications

1. Segment de cage (1, 1', 1" ; 1*) d'un palier à roulement (21),
qui comprend deux plaques latérales (2, 2', 2" ; 2* ; 3, 3', 3" ; 3*) et deux éléments de liaison (4, 4', 4" ; 4* ; 5, 5', 5" ; 5*), de telle sorte que le segment de cage soit d'une seule pièce,
dans lequel les éléments de liaison (4,4', 4" ; 4* ; 5, 5', 5" ; 5*) s'étendent parallèlement à l'axe de rotation (6) des corps de roulement (7, 7', 7") du palier à roulement (21) et dans lequel les plaques latérales (2, 2', 2" ; 2* ; 3, 3', 3" ; 3*) et les éléments de liaison (4, 4', 4" ; 4* ; 5, 5', 5" ; 5*) forment une cavité (8) destinée à recevoir un corps de roulement (7), **caractérisé en ce que**
les deux plaques latérales (2, 2', 2" ; 2*) s'étendent suffisamment loin des deux côtés de la cavité (8) dans la direction périphérique (9) du palier à roulement (21) avec une longueur d'extension libre R_{L} > ½ WK_{D} pour que celles-ci forment,
conjointement avec l'un des deux éléments de liaison (4, 4', 4" ; 4* ; 5, 5', 5" ; 5*) respectifs, une demi-cavité (10, 10' ; 11, 11') respective pour la réception d'un corps de roulement (7', 7") immédiatement adjacent, WK_{D} correspondant au diamètre d'un corps de roulement (7', 7") inséré dans la demi-cavité (10, 10' ; 11, 11').

2. Segment de cage (1, 1', 1" ; 1*) selon la revendication 1, **caractérisé en ce que**
une pluralité de ces segments de cage (1, 1', 1", 1*) sont disposés directement les uns derrière les autres afin de former une cage (22) pour le palier à roulement (21) dans la direction périphérique (9) du palier à roulement (21),
les deux demi-cavités respectives (10, 11) conjointement avec les demi-cavités adjacentes (11', 10') respectives des segments de cage immédiatement adjacents (1, 1', 1") formant respectivement une cavité entière.

3. Segment de cage (1, 1', 1") selon l'une quelconque des revendications 1 à 2, **caractérisé en ce que** les plaques latérales (2, 2', 2" ; 3, 3', 3") présentent des éléments de guidage (12a, 12b ; 13a, 13b) en saillie radialement vers l'extérieur et/ou radialement vers l'intérieur, qui sont formés comme des surfaces de glissement arrondies pour s'appuyer sur une surface annulaire (39a, 39b) d'une bague intérieure (16) ou bague extérieure (17) du palier à roulement (21).

4. Segment de cage (1, 1', 1" ; 1*) selon l'une quelconque des revendications 1 à 3, **caractérisé en ce que** les plaques latérales (2, 2', 2" ; 2* ; 3, 3', 3" ; 3*) et/ou les éléments de liaison (4, 4', 4" ; 4* ; 5, 5', 5" ; 5*) présentent des alimentations en lubrifiant qui se présentent sous la forme d'alésages (18a, 18b, 18c, 18d) ou d'évidements radiaux (28, 29),
les plaques latérales (2, 2', 2" ; 2* ; 3, 3', 3" ; 3*) présentant dans la zone de deux branches d'extrémité libres (30a, 30a*, 30b, 30b* ; 30c, 30c*, 30d, 30d*) respectives de la demi-cavité (10, 11) au moins un de ces alésages (18a, 18d, 19a ;19d) respectifs.

5. Segment de cage (1, 1', 1" ; 1*) selon l'une quelconque des revendications 1 à 4, **caractérisé en ce que** les dimensions de la cavité (8) et des deux demi-cavités (10, 11 ; 10', 11' ; 10", 11") sont telles que les corps de roulement (7, 7', 7") y sont disposés chacun avec un jeu de cavité.

6. Segment de cage (1, 1', 1" ; 1*) selon l'une quelconque des revendications 1 à 5, **caractérisé en ce que**, sur les surfaces côté cavité et/ou côté demi-cavité des plaques latérales (2, 2', 2" ; 2* ; 3, 3', 3" ; 3*) et/ou des éléments de liaison (4, 4', 4" ; 4* ; 5, 5', 5" ; 5*) sont formées des saillies protubérantes (31, 32, 33, 34, 35, 36, 37, 38, 40, 41, 42, 43, 44, 45, 46, 47, 48, 49) avec des surfaces de butée d'extrémité pour les corps de roulement (7, 7', 7") à loger dans les cavités (8) ou demi-cavités (10, 10' ; 11, 11') respectives.

7. Segment de cage (1, 1', 1" ; 1*) selon la revendication 6, **caractérisé en ce que** les saillies (31-38, 40-49) présentent, sur les surfaces côté cavité et/ou côté demi-cavité des plaques latérales (2, 2', 2" ; 2* ; 3, 3', 3" ; 3*) et/ou des éléments de liaison (4, 4', 4" ; 4* ; 5, 5', 5" ; 5*) en fonction de la géométrie et du jeu de cavité prévu dans les cavités (8) et demi-cavités (10, 11 ; 10', 11' ; 10", 11") respectives, respectivement des étendues identiques ou différentes et/ou sont disposées par rapport à la surface opposée du segment de cage (1, 1', 1" ; 1*) en des positions différentes.

8. Segment de cage (1, 1', 1" ; 1*) selon l'une quelconque des revendications 1 à 7, **caractérisé en ce que** les deux demi-cavités (10, 11 ; 10', 11' ; 10", 11") de chaque segment de cage (1, 1', 1" ; 1*), en vue radiale, présentent chacune une géométrie sensiblement en forme de U,
deux demi-cavités (10, 11' ; 11', 10') immédiatement adjacentes de deux segments de cage (1', 1, 1") immédiatement adjacents étant conçues pour recevoir un rouleau conique (20) d'un palier à rouleaux coniques (21),
et les deux branches en U (30a, 30b) de la première plaque latérale (2, 2', 2" ; 2*) étant plus longues que les deux branches en U (30c, 30d) de la deuxième plaque latérale (2, 2', 2" ; 2*).

9. Segment de cage (1*) selon l'une quelconque des revendications 1 à 8, **caractérisé en ce que** les éléments de liaison (4*, 5*) présentent chacun à leur extrémité radiale au moins une surface de guidage radialement saillante (51, 52, 53, 54, 55, 56, 57, 58),
et **en ce que** la distance radiale des deux surfaces de guidage (51-58) radialement opposées est égale ou légèrement inférieure au diamètre des corps de roulement (7, 7', 7") reçus dans le segment de cage (1'),
de telle sorte que le segment de cage (1*) soit guidé radialement au moyen des surfaces de guidage (51-58) sur le chemin de roulement (14a) de la bague intérieure (16) et le chemin de roulement (14b) de la bague extérieure (17) du palier à roulement (21).

10. Cage (22) d'un palier à roulement (21), **caractérisée en ce que** la cage (22) est constituée de plusieurs segments de cage(1, 1', 1" ; 1*) présentant les caractéristiques d'au moins l'une quelconque des revendications précédentes,
le palier à roulement (21) ayant une bague extérieure (17) disposée coaxialement sur une bague intérieure (16) et des corps de roulement (7, 7', 7") disposés radialement entre elles,
chaque corps de roulement (7) étant logé dans une cavité (8) respective d'un segment de cage (1, 1', 1" ; 1*),
chaque corps de roulement (7', 7") immédiatement adjacent à celui-ci étant logé dans deux demi-cavités (10', 11'; 10", 11") de deux segments de cage (1, 1', 1" ; 1*) immédiatement adjacents,
et dans lequel les segments de cage (1, 1', 1" ; 1*) sont disposés directement les uns après les autres dans la direction périphérique (9) du palier à roulement (21).

11. Cage (22) d'un palier à roulement (21) selon la revendication 10, **caractérisée en ce que** tous les segments de cage (1, 1', 1" ; 1*) formant la cage (22) se touchent les uns les autres au niveau de leurs côtés avant (23, 24, 25, 26) orientés dans la direction périphérique du palier à roulement (21).
